# EUROPÄISCHE PATENTSCHRIFT

(11) **EP 2 332 404 B1**
(45) Veröffentlichungstag und Bekanntmachung des Hinweises auf die Patenterteilung: **24.10.2012**
(21) Anmeldenummer: 10189826.0
(22) Anmeldetag: 03.11.2010
(51) Int. Cl.: A01F 29/09

(54) **Häckseltrommel für einen Feldhäcksler**
Shredding drum for a chaff cutter
Tambour de hachoir pour une ramasseuse-hacheuse

(30) Priorität: 18.11.2009 DE 102009046808
(43) Veröffentlichungstag der Anmeldung: 15.06.2011
(73) Patentinhaber: DEERE & COMPANY, Moline, Illinois 61265-8098 (US)
(72) Erfinder: Bacon, Joshua D, 66894, Bechhofen (DE)
(74) Vertreter: Holst, Sönke

(56) Entgegenhaltungen:
- EP-A1- 0 789 994

## Beschreibung

Die Erfindung betrifft eine Häckseltrommel für einen Feldhäcksler, umfassend:
eine Welle mit daran in axialer Richtung nebeneinander befestigten, sich radial erstreckenden Stützscheiben,
um den Außenumfang der Stützscheiben verteilte Messerhalter,
und durch erste Schrauben an den Messerhaltern befestigte Häckselmesser.

### Stand der Technik

Feldhäcksler dienen zur Ernte von ganzen Pflanzen oder ihren Teilen, die im Betrieb mittels eines Erntevorsatzes von einem Feld aufgenommen, durch Vorpresswalzen zusammengedrückt und einer Messertrommel zugeführt werden, deren Häckselmesser die Pflanzen im Zusammenwirken mit einem Gegenmesser zerschneiden. Anschließend werden die zerschnittenen Pflanzen oder -teile optional einer Nachzerkleinerungseinrichtung zugeführt und durch eine Nachbeschleunigungseinrichtung in einen Auswurfkrümmer gefördert, der sie auf ein Transportfahrzeug überlädt. Die zerkleinerten Pflanzen dienen üblicherweise als Viehfutter oder zur Biogaserzeugung.

Die Häckseltrommel umfasst bei einer bekannten Ausführungsform (DE 199 18 553 A1) einen Trommelmantel, auf dem Messerhalter aufgeschweißt sind, an denen wiederum die Häckselmesser angeschraubt sind. Der Trommelmantel ist durch stirnseitige Scheiben oder Speichen mit einer mittigen, drehbar und antreibbar gelagerten Welle verbunden. Hierbei ist ein relativ hoher Aufwand für die Herstellung der Schweißverbindungen zwischen dem Trommelmantel und den Messerhaltern erforderlich, die mit einer hinreichenden Genauigkeit herzustellen sind, um einen unwuchtarmen Rundlauf der Häckseltrommel zu ermöglichen und beim Einschleifen der Häckselmesser mit einer Schleifeinrichtung möglichst wenig Material von dem Häckselmessern abtragen zu müssen. Außerdem bilden die Schweißverbindungen strukturelle Schwachstellen, die im Falle von Verschleiß oder eines Schadens nur schwer oder nicht reparierbar sind.

Weiterhin beschreibt die EP 0 789 994 A1 eine andere Häckseltrommel, bei der eine mittige Welle mit sechs sich radial erstreckenden Stützscheiben verbunden ist. Die Stützscheiben sind an ihrem Umfang mit Gewinden ausgestattet, in die Schrauben eindringen, die sich durch entsprechende Bohrungen in den Messerhaltern und in den Trommelmantel bildenden Platten erstrecken und die Platten und die außen an den Platten angebrachten Messerhalter an den Stützscheiben fixieren. Die Häckselmesser sind wiederum durch andere Schrauben an den Messerhaltern befestigt. Hier werden die Schnittkräfte jeweils über die Messerhalter auf die Stützscheiben übertragen, so dass diese hinreichend stabil zu dimensionieren sind.

Die DE 88 13 953 U1 beschreibt eine Häckseltrommel, bei der eine mittige Welle mit drei sich radial erstreckenden Stützscheiben verbunden ist. Die Messerhalter sind in einer Ausführungsform mit den Stützscheiben verschweißt und in einer anderen Ausführungsform sind Konsolen an den Stützscheiben angeschweißt und die Messerhalter sind mit den Konsolen verschraubt. Die Häckselmesser sind wiederum mit den Messerhaltern verschraubt. Die DE 195 22 056 A1 zeigt eine ähnliche Anordnung, wobei die Messerhalterjedoch gleichzeitig eine segmentierte, äußere Mantelfläche der Häckseltrommel bilden. Bei diesen Ständen der Technik ist ebenfalls als nachteilig anzusehen, dass die Kräfte von den Messerhaltern nur über die Stützscheiben auf die Welle übertragen werden, weshalb die Stützscheiben hinreichend stabil zu dimensionieren sind.

### Aufgabe

Das der Erfindung zu Grunde liegende Problem wird darin gesehen, eine gegenüber dem beschriebenen Stand der Technik verbesserte Häckseltrommel bereitzustellen.

### Lösung

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Eine Häckseltrommel für einen Feldhäcksler umfasst eine Welle mit daran in axialer Richtung nebeneinander befestigten, sich radial erstreckenden Stützscheiben. Um den Außenumfang der Stützscheiben sind Messerhalter verteilt, an denen Häckselmesser mittels erster Schrauben befestigt sind. Die ersten Schrauben erstrecken sich jeweils zusätzlich in entsprechende Gewinde eines in Umfangsrichtung der Häckseltrommel benachbarten Messerhalters. Die ersten Schrauben erfüllen somit eine zweite Aufgabe, nämlich die mechanische Kopplung zweier in Umfangsrichtung aufeinander folgender Messerhalter aneinander.

Auf diese Weise wird die Häckseltrommel in Umfangsrichtung versteift. Gleichzeitig wird der modulare Aufbau mit verschraubten Messern und Messerhaltern, der im Bedarfsfall einen einfachen Austausch ermöglicht, beibehalten.

Die Anbindung der Messerhalter an der Stützscheibe kann durch eine zweite Schraube erfolgen, die sich durch eine Bohrung oder Öffnung im Messerhalter und ein Gewinde in einer Stützscheibe (oder einer damit verbundenen Konsole, vgl. DE 88 13 953 U1) erstreckt. Bei einer anderen Ausführungsform könnte aber auch die erste Schraube diese Aufgabe erfüllen, oder die Messerhalter werden allein durch ihre Form mit der Stützscheibe verrastet oder gekoppelt.

Bei einer bevorzugten Ausführungsform umfassen die Messerhalter jeweils einen ersten Abschnitt, der in Drehrichtung der Häckseltrommel vorn angeordnet ist, und an dem jeweils ein Häckselmesser anliegt. Die Außenfläche des ersten Abschnitts ist vorzugsweise in sich flach, um ein ebenfalls flaches Häckselmesser daran befestigen zu können. Dem ersten Abschnitt kann in Drehrichtung der Häckseltrommel ein zweiter Abschnitt folgen, der eine Öffnung umfasst, durch die sich die zweite, mit der Stützscheibe verschraubte Schraube erstreckt. Der zweite Abschnitt ist vorzugsweise gegenüber dem ersten Abschnitt um einen Winkel von beispielsweise ca. 45° nach außen hin abgewinkelt. Weiterhin kann dem zweiten Abschnitt ein dritter Abschnitt folgen. Der dritte Abschnitt umfasst ein Gewinde, in das sich die erste Schraube des in Drehrichtung der Häckseltrommel folgenden Messerhalters erstreckt. Der dritte Abschnitt kann gegenüber dem zweiten Abschnitt wiederum nach innen hin abgewinkelt sein.

Der nach außen hin abgewinkelte, zweite Abschnitt hat den Vorteil, dass er insbesondere im Zusammenwirken mit einer radial oder gegenüber der Radialen in Drehrichtung nach vorn geneigten vorlaufenden Fläche des ersten Abschnitts des nachfolgenden Messerhalters und der Innenfläche des Häckselmessers eine U-förmige Tasche bildet, die sich als Wurfschaufelfläche zum Abschleudern des Ernteguts eignet und keine oder nur wenig Gelegenheit zur Ansammlung von Erntegut bietet.

### Ausführungsbeispiele

In den Zeichnungen ist ein nachfolgend näher beschriebenes Ausführungsbeispiel der Erfindung dargestellt. Es zeigt:
- Fig. 1: einen Feldhäcksler in Seitenansicht und in schematischer Darstellung,
- Fig. 2: eine perspektivische Ansicht der Häckseltrommel, und
- Fig. 3: eine vergrößerte Schnittansicht der Häckselmesser, Messerhalter und einer Stützscheibe der Häckseltrommel.

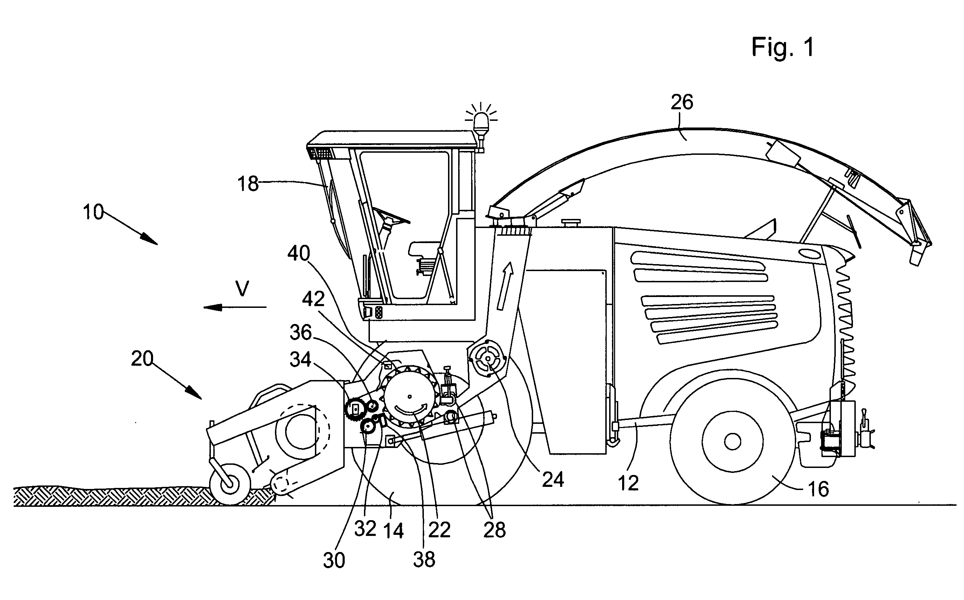

Ein in der Figur 1 gezeigter, selbstfahrender Feldhäcksler 10 baut sich auf einem Rahmen 12 auf, der von vorderen und rückwärtigen Rädern 14 und 16 getragen wird. Die Bedienung der Erntemaschine 10 erfolgt von einer Fahrerkabine 18 aus, von der aus eine Erntegutaufnahmevorrichtung 20 in Form einer Pickup einsehbar ist. Mittels der Erntegutaufnahmevorrichtung 20 vorn Boden aufgenommenes Gut, z. B. Gras oder dergleichen, wird einer mit Häckselmessern 40 besetzten Häckseltrommel 22 zugeführt, die es im Zusammenwirken mit einer Gegenschneide 38 in kleine Stücke häckselt und es einer Fördervorrichtung 24 aufgibt. Das Gut verlässt die Erntemaschine 10 zu einem nebenher fahrenden Anhänger über einen drehbaren Austragsschacht 26. Zwischen der Häckseltrommel 22 und der Fördervorrichtung 24 befindet sich eine Nachzerkleinerungsvorrichtung 28, durch die das zu fördernde Gut der Fördervorrichtung 24 tangential zugeführt wird. Zwischen der Erntegutaufnahmevorrichtung 20 und der Häckseltrommel 22 wird das Gut durch untere Vorpresswalzen 30, 32 und obere Vorpresswalzen 34, 36 transportiert. Die Häckselmesser 40 können mittels einer Schleifeinrichtung 42 geschärft werden.

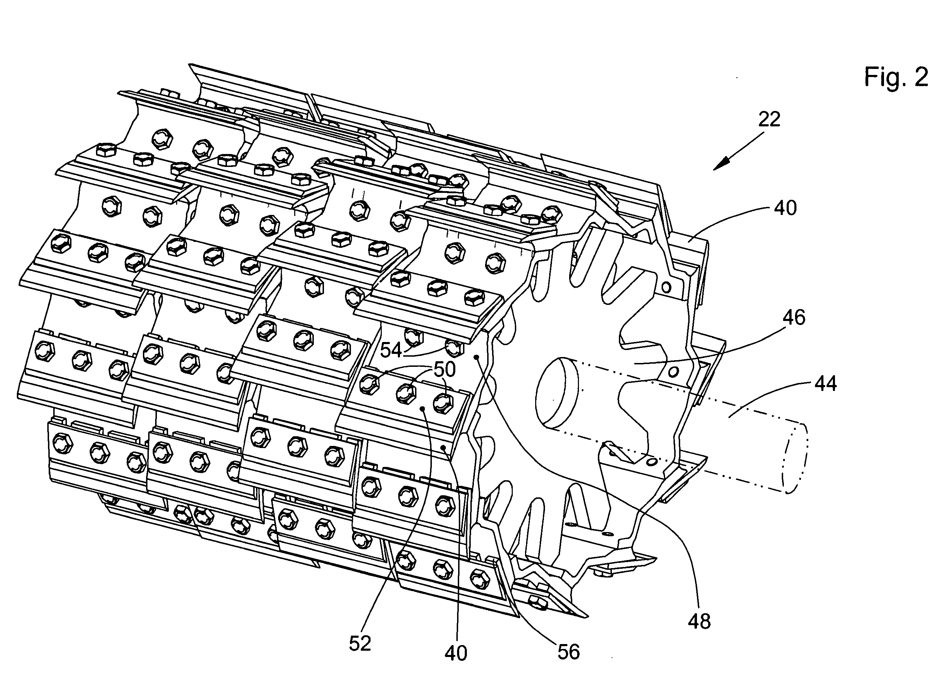

In der Figur 2 ist eine perspektivische Ansicht der Häckseltrommel 22 wiedergegeben. Sie umfasst eine durchgehende Welle 44, auf der in axialer Richtung der Welle 44 eine Anzahl an sich radial zur Welle 44 erstreckenden Stützscheiben 46 nebeneinander befestigt ist. Um den Außenumfang der Stützscheiben 46 sind Messerhalter 48 verteilt, an denen wiederum die einzelnen Häckselmesser 40 durch (in der dargestellten Ausführungsform drei) erste Schrauben 50 befestigt sind. Zwischen den Köpfen der Schrauben 50 und den Häckselmessern 40 befinden sich Andruckplatten 52. Wie in der Figur 2 dargestellt, können jeweils zwei Stützscheiben 46 den in Umfangsrichtung aufeinander folgenden Messerhaltern 40 und Häckselmessern 48 zugeordnet sein. Jeweils zwölf Häckselmesser 40 und zwölf Messerhaltern 48 bilden bei der dargestellten Ausführungsform einen Ring um die Häckseltrommel 22 und es sind insgesamt vier Ringe vorhanden. Jeder Messerhalter 40 ist durch je eine zweite Schrauben 54 mit beiden Stützscheiben 46 verschraubt. Es können je Ring aber auch nur eine Stützscheibe 46 vorgesehen sein, oder drei oder vier oder mehr Stützscheiben 46.

Die Schneidkanten 56 aller Häckselmesser können (insbesondere für die Grasernte) parallel zur Welle 44 verlaufen, wie eingezeichnet, oder (für die Maisernte) im Winkel dazu.

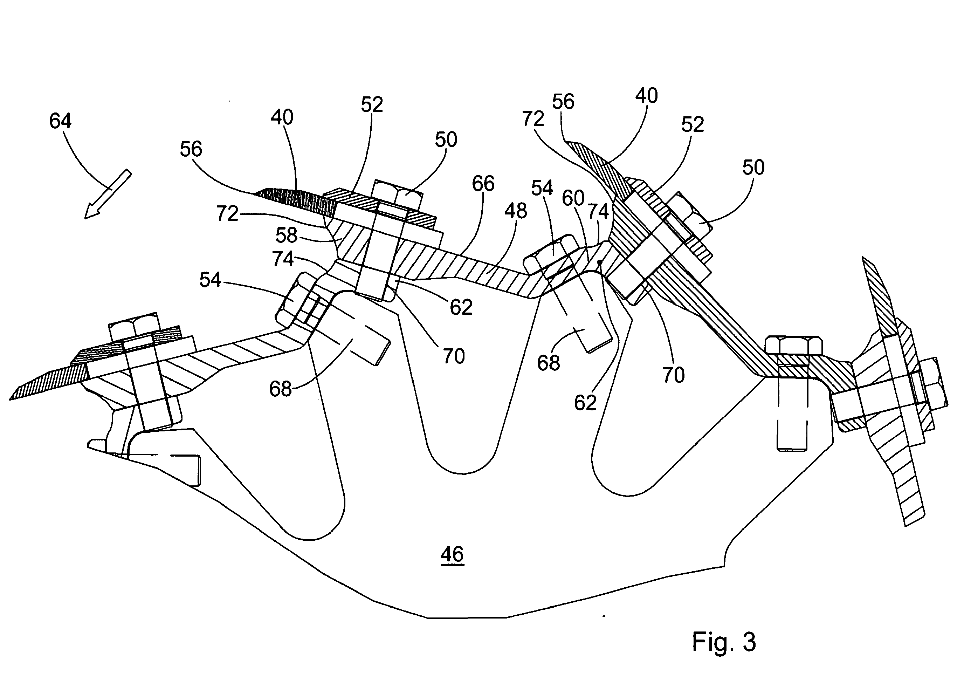

Die Figur 3 zeigt einen vergrößerten Schnitt durch die Häckseltrommel 22. Die Messerhalter 48 umfassen jeweils drei Abschnitte 58, 60 und 62. Der erste Abschnitt 58 liegt in der Drehrichtung der Häckseltrommel 22, wie sie durch den Pfeil 64 angedeutet ist und im Gegenuhrzeigersinn verläuft, vorn, und weist eine ebene äußere Fläche 66 auf, die gegenüber einer an den Umfang der Häckseltrommel 22 angelegten Tangente nach hinten und innen geneigt ist. An der Fläche 66 liegt das Häckselmesser 40 an, das in sich flach ausgebildet ist. Der Bereich des ersten Abschnitts 58, der sich unterhalb des Häckselmessers 40 und der Andruckplatte 52 befindet, ist dicker, als die folgenden Bereiche des Messerhalters 48. An den ersten Abschnitt 58 schließt sich der zweite Abschnitt 60 an, der nach hinten und außen abgewinkelt ist. Durch eine Öffnung oder Bohrung im zweiten Abschnitt 60 erstreckt sich der Schaft der zweiten Schraube 54, der in ein außen in die Stützscheibe 46 eingebrachtes (oder damit verbundenes) Gewinde 68 eingreift. An den zweiten Abschnitt 60 schließt sich schließlich der dritte Abschnitt 62 an, der gegenüber dem zweiten Abschnitt 60 um etwa 90° nach innen abgewinkelt ist. Der dritte Abschnitt 62 umfasst eine Gewindebohrung 70, in welche der Schaft der ersten Schraube 50 eingreift. Der Schaft der ersten Schraube 50 erstreckt sich demnach jeweils durch eine Andruckplatte 52, einen ersten Abschnitt 58 eines Messerhalters 48 und einen dritten Abschnitt 62 des in Drehrichtung der Häckseltrommel 22 vorlaufenden, benachbarten Messerhalters 48. Demnach werden die in Umfangsrichtung aufeinander folgenden Messerhalter 48 durch die erste Schraube 50 untereinander mechanisch verbunden, was die Häckseltrommel 22 in Umfangsrichtung versteift.

Die vorlaufende Fläche 72 des ersten Abschnitts 58 ist gegenüber der Radialen in Drehrichtung nach vorn geneigt orientiert und bildet mit der vorlaufenden Fläche 74 des zweiten Abschnitts sowie der Innenseite der Häckselmesser 40 eine relativ glatte, U-förmige Tasche, in der sich nur wenig Erntegutreste ansammeln können und die das Abschleudern der in der Tasche enthaltenen Erntegutreste erleichtert.

Weitere Vorteile der Häckseltrommel 22 liegen darin, dass keine Schweißverbindungen vorhanden sind, die Schwachstellen bilden können, und dass alle Einzelteile, insbesondere die Messerhalter 48, bei Bedarf leicht ausgetauscht werden können.

## Patentansprüche

1. Häckseltrommel (22) für einen Feldhäcksler (10), umfassend:
eine Welle (44) mit daran in axialer Richtung nebeneinander befestigten, sich radial erstreckenden Stützscheiben (46),
um den Außenumfang der Stützscheiben (46) verteilte Messerhalter (48),
und durch erste Schrauben (50) an den Messerhaltem (48) befestigte Häckselmesser (40),
**dadurch gekennzeichnet, dass** die ersten Schrauben (50) zusätzlich eine Verbindung zwischen in Umfangsrichtung aufeinander folgenden Messerhaltem (48) herstellen.

2. Häckseltrommel (22) nach Anspruch 1, **dadurch gekennzeichnet, dass** die Messerhalter (48) durch je eine zweite Schraube (54) an einer Stützscheibe (46) befestigt sind.

3. Häckseltrommel (22) nach Anspruch 1 oder 2, **dadurch gekennzeichnet, dass** die Messerhalter (48) einen ersten Abschnitt (58) aufweisen, der in Drehrichtung der Häckseltrommel (22) vorn angeordnet ist, und an dem jeweils ein Häckselmesser (40) anliegt.

4. Häckseltrommel (22) nach Anspruch 3, **dadurch gekennzeichnet, dass** die Messerhalter (48) einen zweiten Abschnitt (60) aufweisen, der in Drehrichtung der Häckseltrommel (22) dem ersten Abschnitt (58) folgt und eine Öffnung umfasst, durch die sich eine zweite Schraube (54) erstreckt, die mit der Stützscheibe (46) verschraubt ist.

5. Häckseltrommel (22) nach Anspruch 4, **dadurch gekennzeichnet, dass** der zweite Abschnitt (60) gegenüber dem ersten Abschnitt (58) nach außen hin abgewinkelt ist.

6. Häckseltrommel (22) nach einem der Ansprüche 4 oder 5, **dadurch gekennzeichnet, dass** die Messerhalter (48) einen dritten Abschnitt (62) aufweisen, der in Drehrichtung der Häckseltrommel (22) dem zweiten Abschnitt (60) folgt und ein Gewinde (70) umfasst, in das sich eine erste Schraube (50) des in Drehrichtung der Häckseltrommel (22) folgenden Messerhalters (48) erstreckt.

7. Häckseltrommel (22) nach Anspruch 6, **dadurch gekennzeichnet, dass** der dritte Abschnitt (62) gegenüber dem zweiten Abschnitt (60) nach innen hin abgewinkelt ist.

8. Häckseltrommel (22) nach einem der Ansprüche 3 bis 7, **dadurch gekennzeichnet, dass** die vorlaufende Fläche (72) des ersten Abschnitts (58) radial oder gegenüber der Radialen in Drehrichtung nach vorn geneigt orientiert ist.

9. Häckseltrommel (22) nach einem der vorhergehenden Ansprüche, **dadurch gekennzeichnet, dass** einem durch eine Anzahl in Umfangsrichtung aufeinander folgender Messerhalter (48) gebildeten Ring jeweils zwei benachbarte Stützscheiben (46) zugeordnet sind.

10. Feldhäcksler (10) mit einer Häckseltrommel (22) nach einem der Ansprüche 1 bis 9.

## Claims

1. Cutterhead (22) for a forage harvester (10), comprising:
a shaft (44) having radially extending support discs (46) fastened thereon alongside one another in the axial direction,
knife holders (48) distributed around the outer circumference of the support discs (46),
and chopping knives (40) fastened by first screws (50) to the knife holders (48),
**characterized in that** the first screws (50) additionally establish a connection between knife holders (48) that follow one another in the circumferential direction.

2. Cutterhead (22) according to Claim 1, **characterized in that** the knife holders (48) are fastened to a support disc (46) by a respective second screw (54).

3. Cutterhead (22) according to Claim 1 or 2, **characterized in that** the knife holders (48) have a first section (58) which is arranged at the front in the direction of rotation of the cutterhead (22) and on which in each case a chopping knife (40) rests.

4. Cutterhead (22) according to Claim 3, **characterized in that** the knife holders (48) have a second section (60) which follows the first section (58) in the direction of rotation of the cutterhead (22) and comprises an opening through which there extends a second screw (54) which is screwed to the support disc (46).

5. Cutterhead (22) according to Claim 4, **characterized in that** the second section (60) is angled towards the outside with respect to the first section (58).

6. Cutterhead (22) according to either of Claims 4 and 5, **characterized in that** the knife holders (48) have a third section (62) which follows the second section (60) in the direction of rotation of the cutterhead (22) and comprises a thread (70) into which there extends a first screw (50) of the knife holder (48) that follows in the direction of rotation of the cutterhead (22).

7. Cutterhead (22) according to Claim 6, **characterized in that** the third section (62) is angled towards the inside with respect to the second section (60).

8. Cutterhead (22) according to one of Claims 3 to 7, **characterized in that** the leading surface (72) of the first section (58) is oriented radially or in a manner inclined towards the front with respect to the radial in the direction of rotation.

9. Cutterhead (22) according to one of the preceding claims, **characterized in that** a ring formed by a number of knife holders (48) that follow one another in the circumferential direction is assigned in each case two adjacent support discs (46).

10. Forage harvester (10) having a cutterhead (22) according to one of Claims 1 to 9.

## Revendications

1. Tambour de hachoir (22) pour une ramasseuse-hacheuse (10), comportant :
un arbre (44) muni de disques de support (46) fixés à celui-ci de manière juxtaposée dans la direction axiale et s'étendant radialement,
des porte-couteaux (48) répartis autour de la périphérie extérieure des disques de support (46),
et des couteaux de hachage (40) fixés aux porte-couteaux (48) au moyen de premières vis (50),
**caractérisé en ce que** les premières vis (50) réalisent en outre une liaison entre des porte-couteaux (48) successifs dans la direction périphérique.

2. Tambour de hachoir (22) selon la revendication 1, **caractérisé en ce que** les porte-couteaux (48) sont fixés à un disque de support (46) au moyen d'une deuxième vis respective (54).

3. Tambour de hachoir (22) selon la revendication 1 ou 2, **caractérisé en ce que** les porte-couteaux (48) comprennent une première section (58) qui est disposée à l'avant dans le sens de rotation du tambour de hachoir (22) et contre laquelle s'applique un couteau de hachage respectif (40).

4. Tambour de hachoir (22) selon la revendication 3, **caractérisé en ce que** les porte-couteaux (48) comprennent une deuxième section (60) qui suit la première section (58) dans le sens de rotation du tambour de hachoir (22) et comporte une ouverture à travers laquelle s'étend une deuxième vis (54) qui est vissée sur le disque de support (46).

5. Tambour de hachoir (22) selon la revendication 4, **caractérisé en ce que** la deuxième section (60) est coudée vers l'extérieur par rapport à la première section (58).

6. Tambour de hachoir (22) selon la revendication 4 ou 5, **caractérisé en ce que** les porte-couteaux (48) comprennent une troisième section (62) qui suit la deuxième section (60) dans le sens de rotation du tambour de hachoir (22) et comporte un filetage (70) dans lequel s'étend une première vis (50) du porte-couteau (48) suivant dans le sens de rotation du tambour de hachoir (22).

7. Tambour de hachoir (22) selon la revendication 6, **caractérisé en ce que** la troisième section (62) est coudée vers l'intérieur par rapport à la deuxième section (60).

8. Tambour de hachoir (22) selon l'une quelconque des revendications 3 à 7, **caractérisé en ce que** la face avant (72) de la première section (58) est orientée radialement ou de manière inclinée vers l'avant par rapport à la radiale dans le sens de rotation.

9. Tambour de hachoir (22) selon l'une quelconque des revendications précédentes, **caractérisé en ce que** deux disques de support adjacents respectifs (46) sont associés à un anneau formé par un certain nombre de porte-couteaux (48) successifs dans la direction périphérique.

10. Ramasseuse-hacheuse (10) comprenant un tambour de hachoir (22) selon l'une quelconque des revendications 1 à 9.
